# EUROPEAN PATENT APPLICATION

(11) **EP 4 407 498 A1**
(43) Date of publication of application: **31.07.2024**
(21) Application number: 23153801.8
(22) Date of filing: 27.01.2023
(51) Int. Cl.: G06F 21/62, G06F 21/34, G06Q 20/40, H04L 9/00, G06F 21/64

(54) **METHOD FOR PROVIDING AND VERIFYING PERSONAL DATA**

(71) Applicant: Albrechts, Benjamin, 1100 Wien (AT); Haindl, Thomas, 1210 Wien (AT)
(72) Inventor: Albrechts, Benjamin, 1100 Wien (AT); Haindl, Thomas, 1210 Wien (AT)
(74) Representative: SONN Patentanwälte GmbH & Co KG

(57) **Abstract**

Method for providing and verifying personal data (5) comprising the following steps:
- requesting a verification code (9) for personal data associated with a sender (3) from a provider (4);
- deriving a first checksum (11) based on the personal data (5), and the verification code (9);
- providing the verification code (9) to the sender (3);
- forwarding the personal data (5) and the verification code (9) to a receiver (2);
- computing a second checksum (16) based on the forwarded personal data (5) by the receiver (2);
- transmitting the verification code (9) together with the second checksum (16) from the receiver (2) to the provider (4);
- comparing the transmitted second checksum (16) with the first checksum (11) by the provider (4);
- responsive to determining that the first checksum (11) is equal to the second checksum (16), confirming this identity.

## Description

The disclosure concerns a method for providing and verifying personal data, a provider, a computer program product and a computer system for providing and verifying personal data.

A vast number of services and applications require their users to share personal data in order to use certain features. For example, in order to take out a health insurance with an insurance company, the insurance company requires certain personal information relating to identity and possibly to medical details of the prospect policy holder. For example, many services require their users to create an account and provide personal information and personal data, such as, for example, name, address, phone number, date of birth, a portrait photo, a signature, bank account number, social security number, sex/gender, or medical details and records to name just a few. It is, however, not only crucial to provide the personal data, the data also needs to be verified in order to ensure its authenticity and to avoid fraud, identity theft or other forms of security threats.

For example, the Anti Money Laundering (AML) Directives of the European Union (EU) require firms to check the nature and identity of both their clients and their income streams. This typically requires a forced Know-Your-Customer (KYC) process prior to entering into a new business relationship, as well as conducting background checks on sensitive topics such as political exposure or credit status.

Since its EU-wide binding introduction on May 25, 2018, the European General Data Protection Regulation (GDPR) has established a paradigm shift in processing and sharing personal data, both between companies and subsidiaries of companies. GDPR, and especially its fines for violations, has effectively drastically increased the total screening cost of new customers, as it made transferring existing personal data from one private entity to another legal entity legally challenging: Processing personal data is generally prohibited, unless there is a legal exception and the customer explicitly consents, with no company group privilege.

Consequently, it is widely common for customers to be forced through a new KYC process every time they register at a new online platform. This is an issue especially for business-to-customer (B2C) companies, which rely on frequently recurring transactions with smaller volumes and fees, while the onboarding frictions are increased. Such an increase has a direct impact on the revenue or cost stream by either leading to customer loss pre-contract and/or increasing the required customer support efforts so that the average customer lifetime value decreases.

These onboarding frictions can be almost entirely solved by allowing the customer to submit their own personal data. In this case however, the personal data needs to be verified by a trusted third party and to ensure that the customer has not modified the original personal data set.

An option to satisfy the latter constraint would be for the trusted third party to sign the original personal data. The receiving service would be able to verify the personal data based on the signature of the trusted third party. This straight-forward approach has the drawback that the signed personal data can be forwarded to any further entity or natural person together with the signature, i.e., the verification of the data. This would again pose a security risk to the customer in form of, for example, fraud or identity theft.

It is an object of the invention to alleviate or eliminate at least some of the disadvantages of the prior art. In particular, it is an object of the present disclosure to provide a method and a computer system for providing and verifying personal data with increased security measures for protecting verifiable personal data.

This object is achieved by a method for providing and verifying personal data comprising the following steps:
- requesting by a sender a verification code for personal data associated with the sender from a provider, wherein the provider has access to the personal data;
- deriving a first checksum based on the personal data, and the verification code by the provider, wherein the verification code is associated with the first checksum;

- providing the verification code from the provider to the sender;
- forwarding the personal data and the verification code from the sender to a receiver;
- computing a second checksum based on the forwarded personal data by the receiver;
- transmitting the verification code together with the second checksum from the receiver to the provider;
- comparing the transmitted second checksum with the first checksum associated with the transmitted verification code by the provider;
- responsive to determining that the first checksum is equal to the second checksum, confirming this identity by the provider to the receiver.

Further this is achieved by a computer program product comprising instructions which, when the program is executed by a first computer of a provider, cause the first computer to carry out the steps:
- receiving a request for a verification code for personal data associated with a sender from the sender, wherein the provider has access to the personal data;
- deriving a first checksum based on personal data, and the verification code, wherein the verification code is associated with the first checksum;
- providing the verification code to the sender;
- receiving the verification code together with a second checksum from a receiver;
- comparing the received second checksum with the first checksum associated with the transmitted verification code;
- responsive to determining that the first checksum is equal to the second checksum, confirming this identity to the receiver.

Further this is achieved by a provider with a first data processing apparatus comprising means for carrying out the steps of:
- receiving a request for a verification code for personal data associated with a sender from the sender, wherein the provider has access to the personal data;
- deriving a first checksum based on the personal data, and the verification code, wherein the verification code is associated with the first checksum;
- providing the verification code to the sender;
- receiving the verification code together with a second checksum from a receiver;
- comparing the transmitted second checksum with the first checksum associated with the received verification code;
- responsive to determining that the first checksum is equal to the second checksum, confirming this identity to the receiver.

Furthermore, this object is achieved by a computer system for providing and verifying personal data with:
- a provider comprising a first data processing apparatus comprising means for carrying out the steps of:
   - receiving a request for a verification code for personal data associated with a sender from the sender, wherein the provider has access to the personal data;
   - deriving a first checksum based on the personal data, and the verification code, wherein the verification code is associated with the first checksum;
   - providing the verification code to the sender;
   - receiving the verification code together with a second checksum from a receiver;
   - comparing the received second checksum with the first checksum associated with the received verification code;
   - responsive to determining that the first checksum is equal to the second checksum, confirming this identity to the receiver; and
- a sender comprising a second data processing apparatus comprising means for carrying out the steps of:
   - requesting the verification code for the personal data from the provider;
   - receiving the verification code from the provider;
   - forwarding the personal data and the verification code to a receiver; and
- a receiver comprising a third data processing apparatus comprising means for carrying out the steps of:
   - receiving the personal data and the verification code from the sender;
   - computing a second checksum based on the received the personal data;
   - transmitting the verification code together with the second checksum to the provider;
   - receiving a confirmation of the identity of the first checksum and the second checksum from the provider.

The method includes three involved parties, namely a sender, a provider and a receiver. The sender may for example be associated with a natural person, who intends to share personal data with another entity, in this case the receiver. The natural person may be protected by a data protection act. The provider may be associated with a trusted third party. The trusted third party may for example be a governmental institution, as for example a tax office, a police office, a foreign office, another ministry or department, or for example a trusted firm or NGO. The trusted third party may be a natural person, who is trusted by both the sender and the receiver. The provider has access to the personal data of the sender. The receiver may for example be associated with a legal entity, such as a firm, for example a bank or an insurance company, intending to check the sender and ultimately the identity of the natural person associated with the sender, i.e., their prospect client, and the personal data of the sender. The provider comprises a first data processing apparatus, the sender comprises a second data processing apparatus and the receiver comprises a third data processing apparatus in order to carry out the respective steps of the method to provide and verify personal data of the provider, the sender and the receiver respectively. The first data processing apparatus, the second processing apparatus and the third data processing apparatus may be a part of, for example, a computer or a smart phone. The provider, the sender and the receiver may be configured to communicate with one another, for example, via the internet.

Both the provider and the receiver may comprise an application programming interface (API) to invoke remote procedure calls through the API. Both the provider and the receiver may comprise an individual frontend and an individual backend. The backend may comprise means for storing digital data, such as a computer-readable memory.

The personal data may, for example, comprise a name, an address, a phone number, a date of birth, a portrait photo, a bank account number, a social security number, a personal identification number, a signature, civil or marital status, criminal record, biometric data such as fingerprints or iris recognition, sex/gender, sexuality, and/or medical details associated with the sender.

The method for providing and verifying personal data includes requesting by the sender a verification code for personal data associated with the sender from the provider. Consequently, the provider derives a first checksum based on the personal data and the provider generates the verification code. The verification code is associated with the first checksum. It may be a random number provided by a random number generator. The first checksum may for example be a cryptographic hash, such as SHA-2 or SHA-3, of at least the personal data. The checksum may not only depend on the personal data but also on the string format of the personal data, e.g., the order representation of the personal data. For example, the personal data may be provided in separate fields. For example, a first field may relate to a first name, a second field may relate to a second name and a third field may relate to a place of birth. The order and representation of the fields may influence the derived first checksum. The representation may relate to the format within a field, for example whether or not the field is case-sensitive or the format of calendar dates. The provider may use a predefined string format or may use a string format requested by the sender or by the receiver. The string format may define the order and/or the representation of the fields. The string format may be agreed upon earlier, i.e., before the request for the verification code, for example via a predefined, possibly public, API of the receiver and/or the API of the provider. The string format may comprise, for example, a standardized package using JSON or YAML data formatting. The string format may be capable of handling complex data types such as video, audio, and image encodings.

The string format may be a JSON-encoded string with binary data transformed into base64 strings. The string format may include a convention for the order of the represented fields, e.g., alphabetical sorting by field name.

The provider then provides the verification code to the sender. In a next step, the sender forwards the personal data and the verification code to the receiver. The receiver computes a second checksum based on the forwarded personal data. The algorithm to derive the first checksum is equal to the algorithm to compute the second checksum. In case the same data is used based on the same string format as an input, the first checksum and the second checksum are equal to one another. In case the first checksum and the second checksum are based on further input in addition to the personal data, also the further input needs to be equal for the first checksum and the second checksum to be equal. The provider and the receiver use the same algorithm to derive the first checksum and the second checksum respectively. The algorithm may be agreed upon by the receiver and the provider, for example by means of the API of the receiver and/or the provider. The algorithm may be public. Alternatively, the verification code may contain information on the algorithm for computing the second checksum, such that the receiver can compute the second checksum based on the transmitted verification code containing this information.

The computed second checksum together with the verification code are then transmitted from the receiver to the provider. Transmitting includes both sending by the receiver and receiving by the provider. The provider compares the transmitted second checksum with the first checksum associated with the transmitted verification code. Responsive to determining that the first checksum is equal to the second checksum, the provider confirms this identity to the receiver. The first checksum and the second checksum may be compared to one another in a hexadecimal string representation. In case the first checksum differs from the second checksum, the provider will not confirm the identity and thus will not verify the personal data. The provider, e.g., the trusted third party, is able to confirm the authenticity of the personal data to the receiver without actually providing the personal data to the receiver itself and without receiving any personal data associated with the sender from the receiver. The personal data is forwarded to the receiver only by the sender. Thus, no personal data is exchanged between the receiver and the provider and, hence, no data protection act should be violated. In addition, the personal data may not contain a perpetual proof of authenticity such as, for example, a signature by the provider. The verification of the personal data is based on the confirmation of the identity of the first checksum and the second checksum by the provider to the receiver. This confirmation, however, is not linked to the personal data in any permanent way and is thus insufficient to provide a subsequent verification of the personal data to another entity. Hence, the receiver is unable to share (neither voluntarily nor involuntarily) both the personal data and the verification of the personal data by the provider with another entity. In other words, there is no way to convey trust in the authenticity of the personal data to a third party that trusts the provider but not also and equally the receiver.

The first data processing apparatus, the second processing apparatus and the third data processing apparatus are configured to carry out the steps of the method for providing and verifying personal data of the provider, the sender, and the provider respectively.

The personal data may be a selected subset of data from a larger set of personal data accessible by the provider and associated with the sender. The provider may have access to a total number of N fields of personal data associated with the sender. The sender may only intend to share personal data related to a number of n fields with the receiver, wherein n is smaller than N, and therefore requests a verification code only for the n relevant fields, i.e., the subset of personal data. The further steps after the request by the sender then relate to the subset of n fields, in particular only the subset of selected data is forwarded to the receiver and the calculation of the first checksum and the second checksum is based on the selected subset of personal data. The sender is therefore able to share personal data relating only to a subset of a larger set of personal data.

The string format of the personal data for deriving the first checksum and computing the second checksum may be defined by the receiver and may be transmitted to the sender and/or the provider. The string format may include information on personal data fields required by the receiver. The string format may therefore implicitly define the selected subset of the larger set of personal data.

The first checksum may be stored by the provider, wherein the verification code identifies the stored first checksum. The first checksum may for example be stored in a hexadecimal representation. The verification code may for example comprise an address, a pointer or a query key for querying (and, ideally, uniquely identifying) the stored first checksum.

Additionally, or alternatively to storing the first checksum by the provider, the verification code may comprise the first checksum, in particular in an encrypted form. This way the provider may extract the first checksum from the transmitted verification code. In particular, the first checksum may be decrypted from the verification code.

Optionally, the verification code may comprise the first checksum in a scrambled form. This way the provider may extract the first checksum from the transmitted verification code. The first checksum may be descrambled from the verification code.

The first checksum may be derived based on the personal data and the verification code, wherein the verification code is provided from the provider to the sender, wherein the verification code is forwarded from the sender to the receiver, wherein computing the second checksum by the receiver is based on the forwarded personal data and the forwarded verification code. By including the verification code in the derivation of the first checksum and in the computation of the second checksum, the first checksum and the second checksum depend not only on the personal data but on another input. The verification code may be a semi-random query key, which may be unique per request of the sender. Therefore, each first checksum may be unique per request of the sender. The string format may include a separate field for the verification code.

The first checksum may be derived based on the personal data and a current timestamp, wherein the timestamp is provided from the provider to the sender, wherein the timestamp is forwarded from the sender to the receiver, wherein computing the second checksum by the receiver is based on the forwarded personal data and the forwarded timestamp. By including the timestamp in the derivation of the first checksum and in the computation of the second checksum, the first checksum and the second checksum depend not only on personal data but on another input. The timestamp may ensure that the first checksum is unique per request, although the personal data may be identical. The string format may include a separate field for the timestamp. The derivation of the first checksum may be based on the personal data, the current timestamp and the verification code. As an alternative to the timestamp, a random number may be generated and used to ensure that the first checksum is unique per request although the underlying personal data may be identical.

The verification code may be invalidated after a predefined amount of time after deriving the verification code. For example, the verification code may be valid for five minutes, in particular 1 minute, specifically 30 seconds, after the verification code has been derived.

The method may include the further step:
- revoking the verification code by the provider after receiving the transmitted verification code. The verification code may be revoked before confirming the identity to the receiver. The verification code may only be valid for exactly one confirmation of identity of the first and the second checksum, thus for a single verification of the personal data. Even if the personal data would be shared by the receiver together with the verification code with a third party after the personal data has been verified, the third party would be unable to verify the personal data by means of the verification code with the provider, as the verification code would not be valid anymore.

Requesting a verification code may include requesting a provision of the personal data, wherein providing the verification code includes providing the requested personal data from the provider to the sender. The sender may or may not have access to the personal data. In case the sender does not have access to the personal data, the sender may request the provision of the personal data by the provider. The provider may then provide the personal data together with the verification code to the sender. However, also in this case no personal data needs to be transmitted from the provider directly to the receiver.

Optionally, the method may comprise the further step before providing the requested personal data from the provider to the sender:
- authenticating the sender by the provider.

The sender may authenticate with the provider, for example with the API of the provider, by signing a secure message with a blockchain wallet, wherein the secure message is issued by the provider. The secure message may be unique for each signing process and may have a limited lifetime. The secure message may comprise, for example, an encrypted timestamp (conforming for example with ISO/IEC 18033-3:2010 or ISO/IEC 10118-3:2004), where only the provider has access to the decryption key to decrypt the secure message back into its original format whenever it is submitted. When Sender authenticates with the provider, the latter may decrypt the message and determine the authentication time to apply lifetime limiting (for example, the secure message must not be signed more than 30 minutes ago). The second layer to the authentication mechanism may be the signing procedure by the sender using a crypto wallet. Upon fetching the secure message from the provider, the sender can create the signature from this secure message using the private key of the crypto wallet. A crypto wallet is understood as a public and private keypair. The private key must be drafted from a sufficiently large uniformly distributed set of potential keys. To secure the private key, it may be protected with a password (the wallets must be unlocked on first start, which proves control over the keys) in a wallet interfacing application. A public key can be derived from it which may be shared with anyone. The wallet address typically is a checksum of the public key, but may as well be the public key itself. Sender then may request the verification code and the provision of the personal data from the provider, authenticating with their wallet's signature. Upon receiving the signature, the provider may use the submitted secure message in combination with the provided signature to reconstruct the address of the crypto wallet. If the reconstruction results in the same address as the submitting crypto wallet claims it is, proof of ownership is complete and the owner, i.e., the sender, is abstractly validated and identified. The provider may then query the personal data associated with sender and provide it to the sender. The authentication mechanism may rely on three components: proof of timeliness (encrypted timestamp as secure message); proof of knowledge (private keys are decrypted using the password of the sender); and proof of ownership (secure message is signed with the crypto wallet of the sender).

Optionally, the method may comprise the further step before forwarding the private data from the sender to the receiver:
- authenticating the receiver by the sender.

The authentication mechanism may be mutatis mutandis identical to the mechanism for authenticating the sender by the provider.

Optionally, the method may comprise the further step before forwarding the private data from the sender to the receiver:
- authenticating the sender by the receiver.

The authentication mechanism may be mutatis mutandis identical to the mechanism for authenticating the sender by the provider.

Optionally, the method may comprise the further step:
- authenticating the provider by the receiver.

The authentication mechanism may be mutatis mutandis identical to the mechanism for authenticating the sender by the provider.

Optionally, the method may comprise the further step:
- authenticating the receiver by the provider.

The authentication mechanism may be mutatis mutandis identical to the mechanism for authenticating the sender by the provider.

By way of example, the disclosure is further explained with respect to some selected embodiments shown in the drawings. However, these embodiments shall not be considered limiting for the disclosure.
Fig. 1 schematically shows a sequence diagram of the method for providing and verifying personal data carried out by a computer system.
Fig. 2 schematically shows a sequence diagram of another embodiment of the method for providing and verifying personal data carried out by a computer system.
Fig. 3 schematically shows the computer system of fig. 1 with hardware associated with the receiver, the sender and the provider.
Fig. 4 shows a smartphone associated with an exemplary sender "Jane Doe" displaying a website or mobile application ("app") of an exemplary receiver "Receiver Inc".
Fig. 5 shows the smartphone of fig. 4 displaying a website or app of an exemplary provider "Provider Inc".
Fig. 6 shows the smartphone of figs. 4 and 5 displaying a website or app summarizing the personal information associated with Jane Doe provided by Provider Inc.

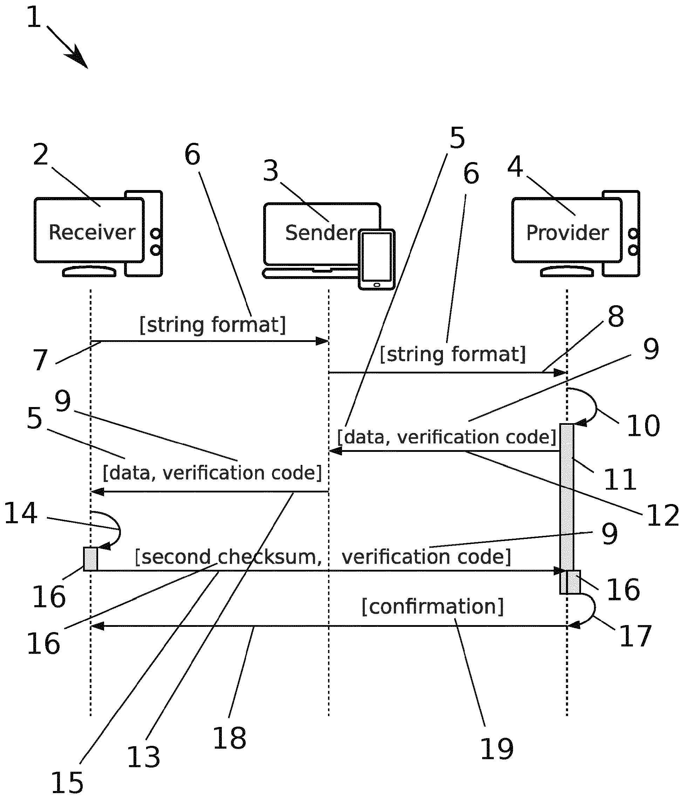

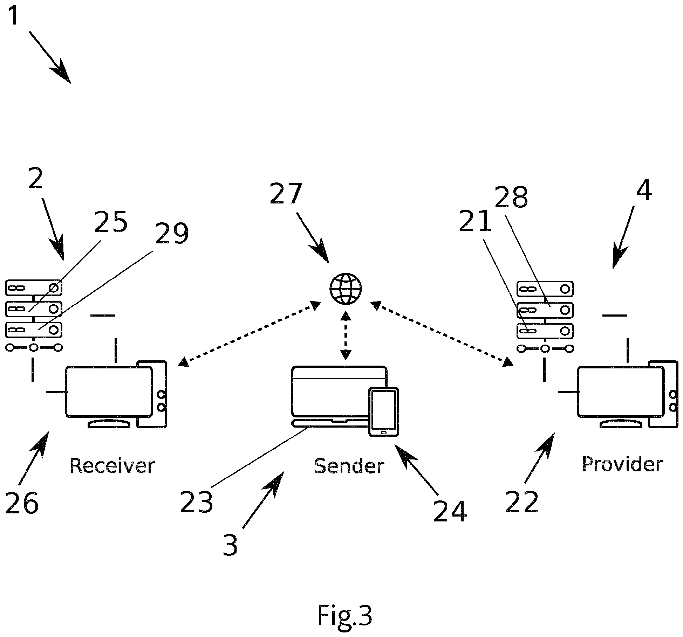

Fig. 1 shows a computer system 1 with a receiver 2, a sender 3 and a provider 4. The provider 4 comprises a first data processing apparatus, the sender 3 comprises a second data processing apparatus (see fig 3) and the receiver 2 comprises a third data processing apparatus (see fig 3). The sender 3 is associated with a natural person, who intends to share personal data 5 with the receiver 2. The receiver is associated with a bank, who requires personal data 5 of the sender 3 to grant the sender access to services. The provider 4 is associated with a tax office, wherein the provider 4 has access to personal data 5 of the sender 3. The receiver 2, the sender 3 and the provider 4 are configured to communicate with one another via the internet and are configured to exchange messages. The receiver 2, the sender 3 and the provider 4 have authenticated one another. Namely, the sender 3 is authenticated by the provider 4 and vice versa. Additionally, the sender 3 is authenticated by the receiver 2 and vice versa. Also, the provider 4 is authenticated by the receiver 2 and vice versa.

The process of providing and verifying personal data 5 is in this example initiated by the receiver 2, who is sending 7 the sender 3 a string format 6. The string format 6 indicates fields, which the receiver 2 requires, whereas the fields relate to the personal data 5 of the sender 3. The string format 6 additionally contains information on how to represent the personal data 5, e.g., the format of calendar dates and information on case sensitivity of applicable fields. The sender 3 is then requesting 8 a verification code 9 for personal data 5 associated with the sender 3 from the provider 4, wherein the provider 4 has access to the personal data 5. The sender 3 is in this step also requesting 8 a provision of the personal data 5 as indicated by the fields contained in the string format 6. The provider 4 has access to a larger set of personal data associated with the sender 3. The personal data 5, which the sender 3 is requesting 8, is in this example a selected subset of data from the larger set of personal data accessible by the provider 4 and associated with the sender 3.

Consequently, the provider 4 is deriving 10 a first checksum 11 based on the personal data 5 as well as the verification code 9, wherein the verification code 9 is associated with the first checksum 11. For deriving the first checksum 11, the personal data 5 is represented as indicated by the string format 6. The first checksum 11 is stored by the provider 4, wherein the verification code 9 identifies the stored first checksum 11. The verification code 9 comprises an identifier of the first checksum 11. By means of the identifier, the provider 4 can identify the stored first checksum 11. The first checksum 11 is based on the personal data 5 of the sender 3. However, the first checksum does not contain any personal data. The first checksum 11 is a cryptographic hash of the formatted string representation of the personal data 5 according to the string format 6 based on a SHA-3 algorithm. The underlying personal data 5 cannot be reconstructed from the first checksum 11 since the cryptographic hash cannot be inverted. Therefore, neither the verification code 9, nor the first checksum 11 contain any personal information of the sender 3 and cannot be linked to the sender 3 without further information.

In the next step of the method, the provider 4 is providing 12 the verification code 9 as well as the requested personal data 5 to the sender 3. The sender 3 is then forwarding 13 the personal data 5 and the verification code 9 to the receiver 2.

The receiver 2 then is computing 14 a second checksum 16 based on the forwarded personal data 5 by the receiver. The provider 4 and the receiver 2 have agreed upon the algorithm for deriving 10 the first checksum 11 and computing 14 the second checksum 16. Both the receiver 2 and the provider 4 therefore use the same algorithm, in this case SHA-3, and calculate the first checksum 11 and the second checksum 16 respectively based on the same string format 6 according to which the personal data 5, i.e., the respective fields that were requested, is ordered and represented.

The receiver 2 is then transmitting 15 the verification code 9 together with the second checksum 16 to the provider 4. The provider 4 is then comparing 17 the transmitted second checksum 16 with the stored first checksum 11 associated with the transmitted verification code 9 by the provider 4. In this example, the first checksum 11 is identical to the second checksum 16. Responsive to determining that the first checksum 11 is equal to the second checksum 16, the provider is confirming 18 this identity to the receiver 2. In order to confirm the identity, the provider 4 sends a confirmation 19 to the receiver. The confirmation 19 comprises the Boolean result of the comparison of the first checksum 11 and the second checksum 16, which in this case is "true", since the first checksum 11 and the second checksum 16 are equal.

In summary, the receiver 2 has received the personal data 5 associated with sender 3 required to grant the sender 3 access to further services. The receiver 2 has verified the personal data 5 with the provider 4, whereas no personal data 5 was transmitted directly from the provider 4 to the receiver 2 or vice versa. The receiver 2, however, has no proof of the validity of the personal data 5 other than the ephemeral confirmation 19 of the provider 4, which is insufficient to prove the validity of the personal data 5 to another entity. The receiver 2 is therefore unable to further distribute the personal data 5 together with a proof of authenticity of the personal data 5 which is independent from the receiver and its well-behavior.

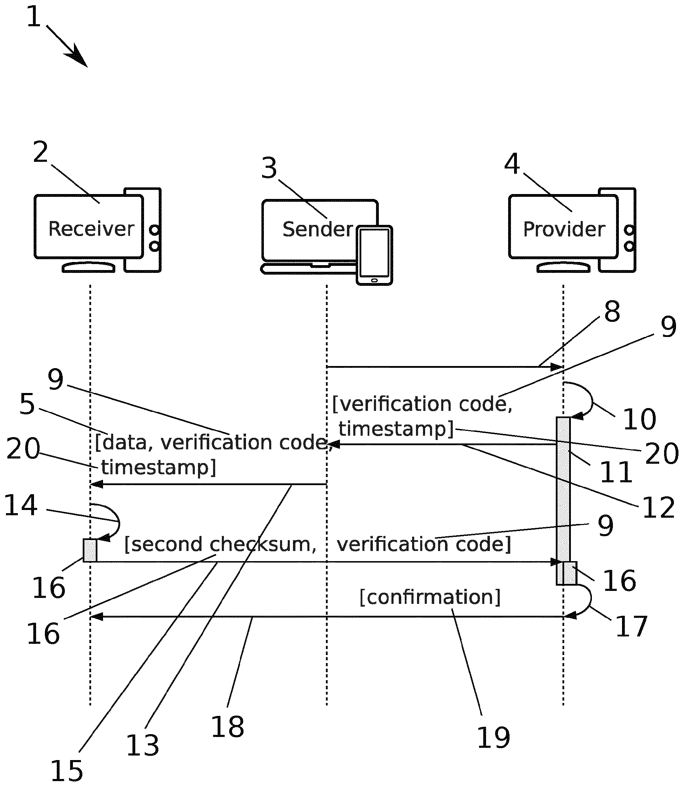

Fig. 2 shows another embodiment of the method for providing and verifying personal data 5, similar to the embodiment of fig. 1. Compared to the embodiment of fig. 1, the string format 6 is omitted. The sender 3 is requesting 8 a verification code 9 for personal data 5 associated with the sender 3 from the provider 4, wherein the provider 4 has access to the personal data 5. The format and the selection of the personal data 5 for deriving 10 the first checksum 11 was decided in advance. The selection may be an implicit selection of all personal data available to the provider, if no subset is defined or agreed upon in advance between the sender 3 and the provider 4. Compared to the embodiment of fig. 1, the sender 3 does not request a provision of the personal data 5 from the provider 4. The sender 3 already has access to the personal data 5.

Consequently, the provider 4 is deriving 10 a first checksum 11 based on the requested personal data 5 (in this case, implicitly all available personal data) as well as the verification code 9, wherein the verification code 9 is associated with the first checksum 11. In this example, the first checksum 11 is derived based on the personal data 5 and a current timestamp 20. The current timestamp 20 is a string indicating the current date and time as determined by the provider immediately before computing the first checksum 11. The timestamp 20 is then provided from the provider 4 to the sender 3. Consequently, the timestamp 20 is forwarded from the sender 3 to the receiver 2. Accordingly, computing 14 the second checksum 16 by the receiver 2 is based on the forwarded personal data 5 and the forwarded timestamp 20.

The timestamp 20 ensures that the first checksum 11 is unique per request, even if the personal data 5 may be identical.

Fig. 3 shows the computer system 1 of fig. 1 with hardware associated with the receiver 2, the sender 3 and the provider 4, respectively. A first data processing apparatus 21 is part of a first computer 22 associated with the provider 4. A second data processing apparatus 23 is part of a second computer 24 (the schematically indicated desktop PC and the mobile phone are indicated as alternative implementations, i.e. the second computer 24 may be a desktop PC or a mobile phone, for example) associated with the sender 3. A third data processing apparatus 25 is part of a third computer 26 associated with the sender 3. The first data processing apparatus 21, the second data processing apparatus 23, and the third data processing apparatus 25 are configured to communicate with one another via a computer network 27, e.g. the internet. Therefore, the provider 4, the sender 3 and the receiver 2 are configured to communicate with one another via the internet 27.

The provider 4 has a first computer-readable storage medium 28 configured for storing at least personal data 5, the verification code 9 as well as the first checksum 11. The first data processing apparatus 21 is configured to read data from and store data to the first computer-readable storage medium 28. Thus, it has access to the personal data 5 stored thereon.

The first computer 22 executes a computer program product comprising instructions which, when the program is executed by the first computer 22 of the provider 4, cause the first computer 22 to carry out the steps (details see fig. 1):
- receiving a request for provision of the personal data 5 and for a verification code 9 for personal data 5 associated with a sender 3 from the sender 3 together with a string format 6;
- deriving the first checksum 11 based on the personal data 5, and the verification code 9, wherein the verification code 9 is associated with the first checksum 11;
- providing the verification code 9 and the personal data 5 to the sender 3;
- receiving the verification code 9 together with the second checksum 16 from the receiver 2;
- comparing the received second checksum 16 with the first checksum 11 associated with the received verification code 9; and
- responsive to determining that the first checksum 11 is equal to the second checksum 16, confirming this identity to the receiver 2.

The sender 3 has a second computer-readable storage medium (not shown) configured for (temporarily) storing at least personal data 5 and the verification code 9. The second data processing apparatus 23 is configured to read data from and store data to the second computer-readable storage medium.

The sender 3 comprises the second data processing apparatus 23 comprising means for carrying out the steps of (details see fig. 1) :
- receiving a string format 6 from the receiver 2;
- requesting the provision of the personal data and the verification code 9 for the personal data 5 from the provider 4 and sending the string format 6 to the provider 4;
- receiving the verification code 9 and the personal data 5 from the provider 4; and
- forwarding the personal data 5 and the verification code 9 to the receiver 2.

The receiver 2 has a third computer-readable storage medium 29 configured for storing at least personal data 5, the verification code 9 as well as the first checksum 11 and the second checksum 16. The third data processing apparatus 25 is configured to read data from and store data to the third computer-readable storage medium 29.

The receiver 2 comprises the third data processing 25 apparatus comprising means for carrying out the steps of (details see fig. 1) :
- sending the string format 6 to the sender 3;
- receiving the personal data 5 and the verification code 9 from the sender 3;
- computing a second checksum 16 based on the received the personal data 5;
- transmitting the verification code 9 together with the second checksum 16 to the provider 4; and
- receiving a confirmation 19 of the identity of the first checksum 11 and the second checksum 16 from the provider 4.

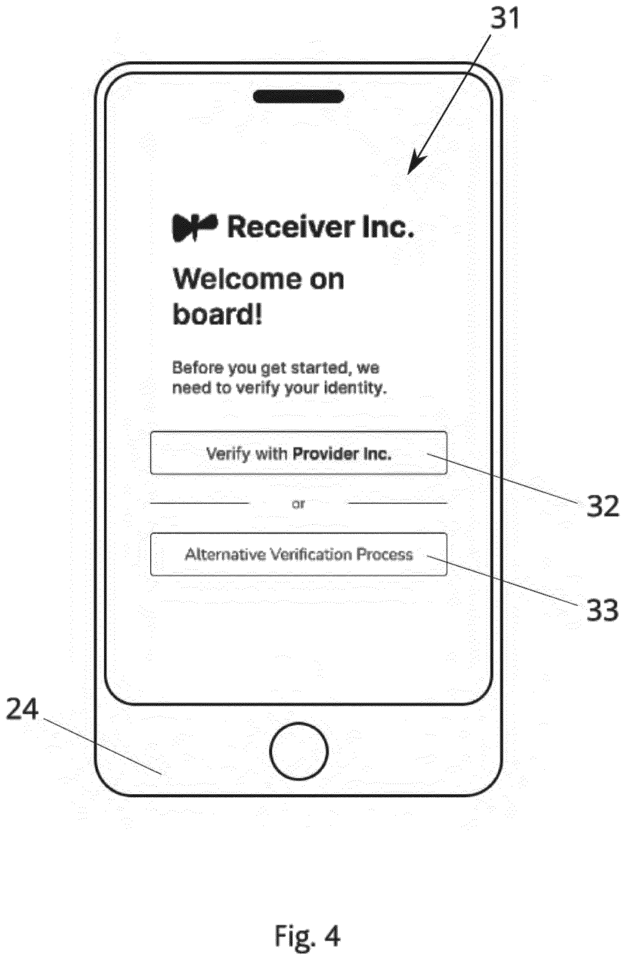

Figures 4, 5 and 6 show the second computer 24 (in this case a smartphone) associated with the sender 3. The second computer 24 displays an app or a website in a browser, with which the sender 3, in this example a natural person named "Jane Doe" interacts in an exemplary situation. The name "Jane Doe" as well as any further personal data 5 associated with "Jane Doe" is purely fictional and does not relate to any real person. Any exemplary code snippets are pseudocode and represent a schematic, illustrative example.

The natural person Mrs. Jane Doe would like to set up her account with Receiver Inc, an online broker for virtual assets. Jane Doe is in this example the sender 3, whereas Receiver Inc is the receiver 2. Jane Doe already has her personal data 5 stored at Provider Inc, a company she signed up with earlier, who is in this example the provider 4. Jane Doe would like to use her personal data 5 stored by Provider Inc for signing up with Receiver Inc. Provider Inc has already verified the personal data 5. Receiver Inc trusts Provider Inc, i.e., Receiver Inc assumes that Provider Inc only stores authenticated personal data 5 and would only verify such authentic personal data 5.

The following situation is an illustrative example of the method for providing and verifying personal data 5 according to the present disclosure.

In a first step, Jane Doe accesses an onboarding website 31 of Receiver Inc as illustrated in fig. 4. Jane Doe can choose to use Provider Inc as her service provider, i.e., provider 4. The onboarding website 31 shows a (digital) first button 32 stating "Sign up with Provider Inc". A second button 33 states "Alternative Verification Process", which Jane Doe may choose in case she prefers to use another service provider. Jane Doe proceeds to click on the first button 32. By pressing the first button 32, an API endpoint of Provider Inc is called by the backend of Receiver Inc to generate a mapping key.

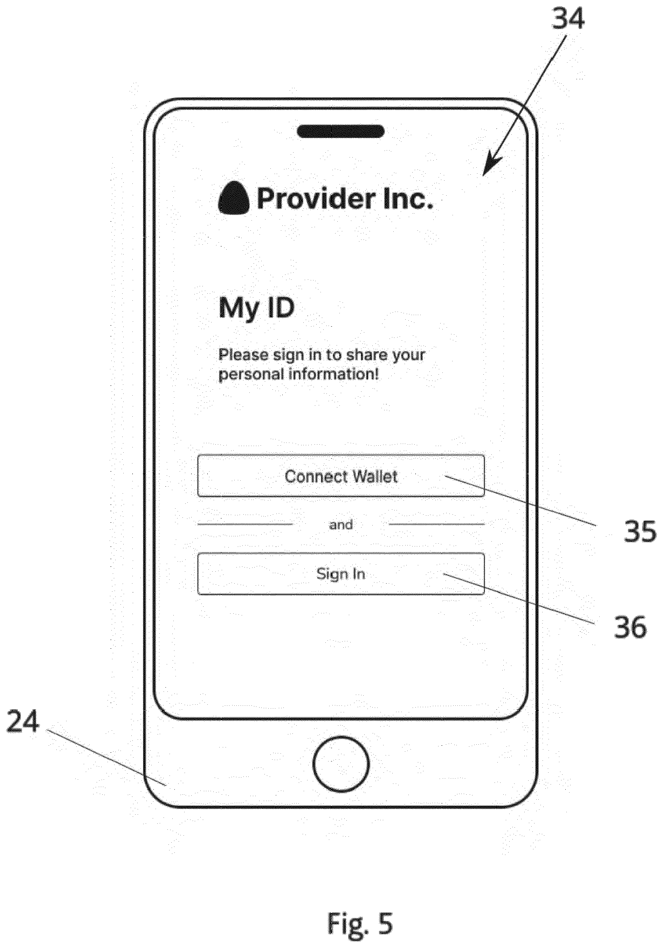

The mapping key is encrypted by Provider Inc and can thus be verified as a valid key by Provider Inc, as only Provider Inc has the secret to decrypt it. The mapping key received by Receiver Inc's backend is forwarded to the front end, which then forwards Jane Doe to a sign-in website 34 of provider 4, i.e., Provider Inc as illustrated in fig. 5. For example, the sign-in website 34 of Provider Inc may be provided at the exemplary address:
'https://app.provider.inc/push/${receiver_wallet_address}/${mapp ing_key}/${required_data_fields}', where
`${receiver_wallet_address}' is replaced by Receiver Inc with its own wallet address (e.g. '0x019283746aB2D3f17A'),
'${mapping_key}' is replaced in the front end with the mapping key received from Provider Inc (e.g.
'y7tqbUQzmRi9EzFGI69mjz8a5IomX60B1ppKhsJMWGc%3D_7903df04cdd5285a c29b3322735f7c213b9830d0dceaab2af840fc6bfc2cd23a'), and '${required_data_fields}' is replaced by Receiver Inc with a comma-separated list of the fields of personal data needed from Jane Doe (e.g.
'legal_type,title_before,first_name,surname,title_after,birthdat e,nationality,gender,kyc_completed,kyc_valid_until'), wherein the individual fields are identified by pre-defined field names, from which Receiver Inc selects the field names according to its needs and uses the same selection for all users going through the same onboarding routine.

Mapping by using the wallet address is entirely optional. A matching e-mail address or phone number may be used alternatively, for example.

In the front end of Provider Inc (Fig. 5), Jane Doe proceeds to click on the third button 35 stating "Connect Wallet". She then proceeds to click on the fourth button 36 stating "Sign in" to verify her identity via her crypto wallet (this step is however optional).

Jane Doe then collects her personal data 5 from provider by sending her credentials to an endpoint of Provider Inc (e.g. at 'https://app.provider.inc/mydata/', or short `/mydata/'). Jane Doe (automatically) requests only the fields of her personal data 5 that are required by Receiver Inc, as indicated above for '${required_data_fields}'. The request can be signed with a private key under exclusive (physical) control of Jane Doe (e.g. stored locally on her user device, such as in a secure element). Provider Inc responds with the requested fields of the personal data 5 associated with the person, which is registered with a public key that verifies the signature belonging to the request. In this example, the response comprises the data according to the following pseudocode:

```
 personal_data = {
     legal_type: "Natural Person",
     title_before: "",
     surname: "Doe",
     first_name: "Jane",
     title_after: "MSc",
     birthdate: "2000-08-15",
     gender: "female",
     kyc_completed: "2023-06-03",
     kyc_valid_until: "2025-06-03" }
```

Jane Doe has now control of the received personal data 5 and could in principle choose to modify the personal data 5 before forwarding it to Receiver Inc. In this example, Jane Doe reviews the received personal data 5 and chooses to forward the personal data 5 to a designated API endpoint provided by Receiver Inc.

In case Provider Inc and Receiver Inc are in a business relationship with one another, Provider Inc may provide the appropriate API endpoint address for Jane Doe directly.

Jane Doe notifies Provider Inc about her intention to send her data to a third party. This is achieved by sending an HTTP POST request to the endpoint `/push/register/'. The request comprises the same parameters as the request for the mapping key by Receiver Inc described in detail above, and differs in that it is sent by Jane Doe and it is signed by her private key (`wallet'). Upon receiving this request, Provider Inc computes a first checksum 11 based on the requested personal data 5 accessible by Provider Inc. The calculation of the first checksum 11 is based on both the personal data 5 (`data') and a current timestamp 20 ('date_str') as illustrated by the following exemplary pseudocode:

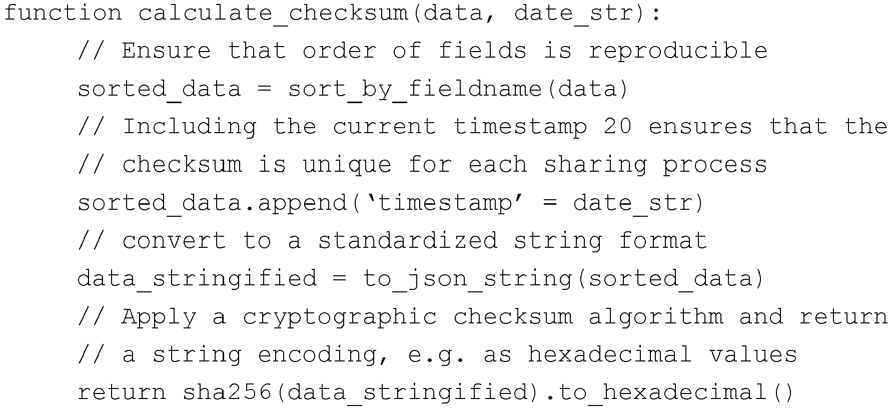

This function produces an output similar to `f0e4c2f76c58916ec258f246851bea091d14d4247a2fc3e18694461b1816e13 b' for the first checksum 11. This is stored together with the verification code 9 for accessing it, the timestamp used for computing it (optional), and a wallet address of Receiver Inc for which the mapping key had been requested (also optional).

After computing the first checksum 11, Provider Inc provides Jane Doe with the metainformation required to validate the personal data 5, i.e., the response of the Provider Inc to the request to the endpoint `/push/register/' comprises the timestamp ('date_str') used for computing the first checksum 11. In this example, the verification code 9 is identical with the mapping key. In particular if the two are different, the verification code 9 is also returned in the response. If Provider Inc cannot provide this information (e.g. because necessary personal data is unavailable or unapproved), the response is an error message.

Storing this information at Provider Inc is not necessarily required. Alternatively, the first checksum 11 could be attached to the verification code 9 in an encrypted format, whereas only Provider Inc may have the private key necessary to decrypt the first checksum 11 from the verification code 9.

Jane Doe then attaches the returned verification code 9 to her personal data 5. Note that this step is not necessarily done by the natural person Jane Doe herself but automatically by means of the app or the website she is using. The app or website may be provided by Provider Inc.

The final dataset ready to be forwarded to Receiver Inc is stated in the following pseudocode:

```
 final_data = {
    data: {
        legal_type: "Natural Person",
        title_before: "",
        surname: "Doe",
        first_name: "Jane",
        title_after: "MSc",
        birthdate: "2000-08-15",
        gender: "female",
        kyc_completed: "2023-06-03",
        kyc_valid_until: "2025-06-03" }
    trace: {
        verification_code:
 "y7tqbUQzmRi9EzFGI69mjz8a5IomX60B1ppKhsJMWGc%3D_7903df04cdd5285a
 c29b3322735f7c213b9830d0dceaab2af840fc6bfc2cd23a",
        timestamp: "2023-09-12T12:14:23",
        receiver_wallet_address: "0x019283746aB2D3f17A"
 } }
```

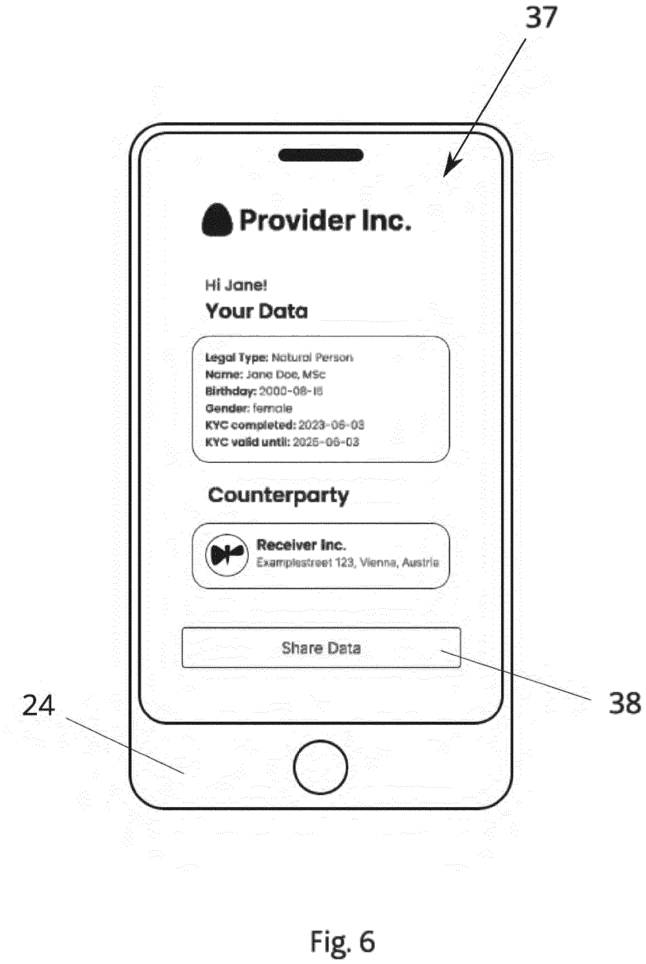

Jane Doe is then forwarded to a forwarding page 37 (see fig. 6), which in this example displays the personal data 5 (as stored by Jane Doe) as well as the receiver 2, with whom Jane Doe intends to share her personal data 5. The intended receiver 2 is indicated as "counterparty", in this case the intended receiver 2 is "Receiver Inc." in "Examplestreet 123, Vienna, Austria". The forwarding page 37 comprises a fifth button 38 "Share Data". By pressing the fifth button 38, Jane Doe forwards the personal data 5 to the receiver 2, in this case to Receiver Inc. The personal data 5 is forwarded by Jane Doe and not directly by Provider Inc. The fifth button 38 "Share Data" triggers that the smartphone (the second computer 24) of Jane Doe forwards personal data 5, which is directly accessible by Jane Doe, i.e. the smartphone of Jane Doe. Therefore, Jane Doe would be able to manipulate the personal data 5 before forwarding the personal data 5.

The dataset is then forwarded to the provided endpoint of Receiver Inc (e.g. at `/push/receive/'). Receiver Inc uses the exact same method for computing the second checksum 16 as is used for deriving the first checksum 11, which guarantees that the first checksum 11 and the second checksum 16 are exactly equal, in case the input, i.e., the personal data 5 and the timestamp 20 are equal and equally formatted. If only a single bit in the personal data 5 is different, the verification of the second checksum 16 with the first checksum 11 will fail. For verification, Receiver Inc sends an HTTP POST request to the endpoint `/push/verify/' of Provider Inc (the verification request). This verification request comprises the second checksum 16 computed by Receiver Inc, the verification code 9 ('verification_code') received by Receiver Inc together with the personal data 5 and with a signature from the private key of Receiver Inc to prove that the verification request is coming from the same entity that requested the mapping key.

Provider Inc receives the verification request, retrieves the verification data stored associated with the verification code 9 and verifies the signature of the verification request with the receiver address associated with the verification code. Upon success, the second checksum received with the verification request is compared with the first checksum associated with the verification code. If equality is found, Provider Inc responds to the verification request with a confirmation, otherwise with an error code or error message.

Upon receiving the verification that Jane's forwarded personal data 5 indeed is correct and unmodified, Receiver Inc can fully unlock Jane Doe on their product page.

We refer to the steps of calculating a first checksum 11 and a second checksum 16 on Jane Doe's personal data 5 by Provider Inc and Receiver Inc respectively and including the test for identity of the first checksum 11 and the second checksum 16 as zero-knowledge-proofs, as the personal data 5 cannot be reconstructed from the transmitted second checksum 16.

Including the current timestamp 20 in the derivation of the first checksum 11 and the second checksum 16 ensures that the first checksum 11 and the second checksum 16 are always different for each sharing process, voiding any chance of identifying the individual person from any given checksum even in structured datasets.

All steps are usually part of a fully automated pipeline so that in total only three buttons need to be clicked by Jane Doe:
- First button 31 "PUSH with Provider Inc." This action leads to assigning Provider Inc as the data provider 4.
- Fourth button 36 "Sign In". This action leads to providing the personal data 5 from Provider Inc to Jane Doe.
- Fifth button 38 "Share Data with Receiver Inc." This action leads to forwarding the dataset in Jane Doe's control to Receiver Inc and triggers the zero-knowledge-proof process as described above.

Depending on Jane Doe's actions, the following scenarios may occur:
Case 1: Jane Doe leaves her personal data unmodified. The zero-knowledge-proof succeeds and Jane Doe is unlocked at Receiver Inc.
Case 2: Jane Doe modifies parts of her personal data 5 before forwarding it to Receiver Inc. The zero-knowledge-proof fails, thus the modified personal data 5 cannot be verified.
Case 3: Jane Doe leaves the personal data 5 unmodified but the transfer of personal data 5 leads to an error: The zero-knowledge-proof fails and Jane Doe would have to try again.
Case 4: Jane Doe chooses to modify the 'requested_fields' variable herself: Receiver Inc's API will not accept the reduced or expanded data, no zero-knowledge-proof is required.
Case 5: Jane Doe modifies the verification metadata, such as the verification code 9: Either the zero-knowledge-proof fails or the verification code 9 cannot be decrypted/queried in the database and no record is found.

In any other case other than case 1 Receiver Inc may restrict access for Jane Doe until Receiver Inc has received the requested personal data 5 and the personal data 5 has been verified. Receiver Inc may choose to waive the verification of the personal data 5 and sign-in Jane Doe anyway. Provider Inc may be able to observe such behavior by monitoring Receiver Inc's use of Provider Inc's endpoints `/push/' (for receiving the mapping key) and `/push/verify/' (for performing verification).

## Claims

1. Method for providing and verifying personal data (5) comprising the following steps:
- requesting by a sender (3) a verification code (9) for personal data associated with the sender (3) from a provider (4), wherein the provider (4) has access to the personal data (5) ;
- deriving a first checksum (11) based on the personal data (5), and the verification code (9) by the provider (4), wherein the verification code (9) is associated with the first checksum (11) ;
- providing the verification code (9) from the provider (4) to the sender (3);
- forwarding the personal data (5) and the verification code (9) from the sender (3) to a receiver (2);
- computing a second checksum (16) based on the forwarded personal data (5) by the receiver (2);
- transmitting the verification code (9) together with the second checksum (16) from the receiver (2) to the provider (4);
- comparing the transmitted second checksum (16) with the first checksum (11) associated with the transmitted verification code (9) by the provider (4);
- responsive to determining that the first checksum (11) is equal to the second checksum (16), confirming this identity by the provider (4) to the receiver (2).

2. Method according to claim 1, **characterized in that** the personal data (5) is a selected subset of data from a larger set of personal data accessible by the provider (4) and associated with the sender (3).

3. Method according to any one of the previous claims, **characterized in that** the first checksum (11) is stored by the provider (4), wherein the verification code (9) identifies the stored first checksum (11).

4. Method according to any one of the previous claims, **characterized in that** the verification code (9) comprises the first checksum (11), in particular in an encrypted form.

5. Method according to any one of the previous claims, **characterized in that** the first checksum (11) is derived based on the personal data (5) and the verification code (9), wherein the verification code (9) is provided from the provider (4) to the sender (3), wherein the verification code (9) is forwarded from the sender (3) to the receiver (2), wherein computing the second checksum (16) by the receiver (2) is based on the forwarded personal data (5) and the forwarded verification code (9) .

6. Method according to any one of the previous claims, **characterized in that** the first checksum (11) is derived based on the personal data (5) and a current timestamp (20), wherein the timestamp (20) is provided from the provider (4) to the sender (3), wherein the timestamp (20) is forwarded from the sender (3) to the receiver (2), wherein computing the second checksum (16) by the receiver (2) is based on the forwarded personal data (5) and the forwarded timestamp (20).

7. Method according to any one of the previous claims, **characterized in that** the verification code (9) is invalidated after a predefined amount of time after deriving the verification code (9).

8. Method according to any one of the previous claims, **characterized by** the further step:
- revoking the verification code (9) by the provider (4) after receiving the transmitted verification code (9).

9. Method according to any one of the previous claims, **characterized in that** requesting a verification code (9) includes requesting a provision of the personal data (5), wherein providing the verification code (9) includes providing the requested personal data (5) from the provider (4) to the sender (3).

10. Method according to claim 9, **characterized by** the further step before providing the requested personal data (5) from the provider (4) to the sender (3):
- authenticating the sender (3) by the provider (4).

11. Method according to any one of the previous claims, **characterized by** the further step before forwarding the private data from the sender (3) to the receiver (2):
- authenticating the receiver (2) by the sender (3).

12. Method according to any one of the previous claims, **characterized by** the further step before forwarding the private data (5) from the sender (3) to the receiver (2):
- authenticating the sender (3) by the receiver (2).

13. A computer program product comprising instructions which, when the program is executed by a first computer (26) of a provider (4), cause the first computer (26) to carry out the steps:
- receiving a request for a verification code (9) for personal data (5) associated with a sender (3) from the sender (3), wherein the provider (4) has access to the personal data (5) ;
- deriving a first checksum (11) based on personal data (5), and the verification code (9), wherein the verification code (9) is associated with the first checksum (11);
- providing the verification code (9) to the sender (3);
- receiving the verification code (9) together with a second checksum (16) from a receiver (2);
- comparing the received second checksum (16) with the first checksum (11) associated with the transmitted verification code (9) ;
- responsive to determining that the first checksum (11) is equal to the second checksum (16), confirming this identity to the receiver (2).

14. A provider (4) with a first data processing apparatus (21) comprising means for carrying out the steps of:
- receiving a request for a verification code (9) for personal data (5) associated with a sender (3) from the sender (3), wherein the provider (4) has access to the personal data (5) ;
- deriving a first checksum (11) based on the personal data (5), and the verification code (9), wherein the verification code (9) is associated with the first checksum (11);
- providing the verification code (9) to the sender (3);
- receiving the verification code (9) together with a second checksum (16) from a receiver (2);
- comparing the transmitted second checksum (16) with the first checksum (11) associated with the received verification code (9);
- responsive to determining that the first checksum (11) is equal to the second checksum (16), confirming this identity to the receiver (2).

15. A computer system (1) for providing and verifying personal data (5) with:
- a provider (4) comprising a first data processing apparatus (21) comprising means for carrying out the steps of:
- receiving a request for a verification code (9) for personal data (5) associated with a sender (3) from the sender (3), wherein the provider (4) has access to the personal data (5) ;
- deriving a first checksum (11) based on the personal data (5), and the verification code (9), wherein the verification code (9) is associated with the first checksum (11) ;
- providing the verification code (9) to the sender (3) ;
- receiving the verification code (9) together with a second checksum (16) from a receiver (2);
- comparing the received second checksum (16) with the first checksum (11) associated with the received verification code (9);
- responsive to determining that the first checksum (11) is equal to the second checksum (16), confirming this identity to the receiver (2); and
- a sender (3) comprising a second data processing apparatus (23) comprising means for carrying out the steps of:
- requesting the verification code (9) for the personal data (5) from the provider (4);
- receiving the verification code (9) from the provider (4) ;
- forwarding the personal data (5) and the verification code (9) to a receiver (2); and
- a receiver (2) comprising a third data processing apparatus (29) comprising means for carrying out the steps of:
- receiving the personal data (5) and the verification code (9) from the sender (3);
- computing a second checksum (16) based on the received the personal data (5);
- transmitting the verification code (9) together with the second checksum (16) to the provider (4);
- receiving a confirmation of the identity of the first checksum (11) and the second checksum (11) from the provider (4) .
